# FASCICULE DE BREVET EUROPEEN

(11) **EP 0 495 326 B1**
(45) Date de publication et mention de la délivrance du brevet: **31.01.1996**
(21) Numéro de dépôt: 91403471.5
(22) Date de dépôt: 19.12.1991
(51) Int. Cl.: F16H 7/12, F02B 67/06

(54) **Dispositif de réglage de la tension d'une courroie d'entraînement d'accessoires pour un moteur de véhicule automobile**
Riemenspannungseinstellvorrichtung für den Antrieb eines Kraftfahrzeugmotor-Zusatzaggregates
Belt tension control device for an auxiliary drive of an automotive vehicle engine

(30) Priorité: 17.01.1991 FR 9100514
(43) Date de publication de la demande: 22.07.1992
(73) Titulaire: AUTOMOBILES PEUGEOT, F-75116 Paris (FR); AUTOMOBILES CITROEN, F-92200 Neuilly-sur-Seine (FR)
(72) Inventeur: Marie, Dominique, F-78700 Conflans Saint Honorine (FR)
(74) Mandataire: Durand, Yves Armand Louis

(56) Documents cités:
- DE-C- 643 677
- PATENT ABSTRACTS OF JAPAN vol. 12, no. 260 (M-720)(3107) 21 Juillet 1988 & JP-A63 043 060 (ISEKI) 24 Février 1988

## Description

La présente invention se rapporte à un dispositif de réglage de la tension d'une courroie de transmission.

On connaît depuis longtemps des systèmes de transmission à poulies et courroie, pour entraîner des accessoires de moteur tels que pompes, alternateur ou analogues, grâce à une poulie solidaire en rotation d'un arbre de vilebrequin. Les systèmes de transmission connus sont le plus souvent montés sur un boîtier fixé au moteur, et comprennent un dispositif de réglage de la tension de courroie. Généralement, ces dispositifs sont constitués par un galet tendeur monté fou sur un axe déplaçable par rapport aux poulies que l'on désire entraîner. Le déplacement de l'axe du galet tendeur peut être obtenu à l'aide d'un organe de commande tel qu'une vis de réglage permettant de faire varier la force d'appui du galet contre la courroie, en réglant ainsi la tension de cette dernière. Les dispositifs de réglage de la tension sont couramment disposés à l'avant du système de transmission, dans le boîtier de support des accessoires.

Cependant, dans les moteurs modernes, l'espace disponible pour l'installation du dispositif de réglage à l'avant des accessoires est fréquemment limité par des éléments du moteur (radiateur,...) ou de la caisse du véhicule (poutres,...). De plus, l'accès à l'organe de commande est rendu difficile par le faible espace libre à proximité du système de transmission.

On connaît également d'après JP-A-63 043 060, un système d'entraînement par courroie d'un véhicule comportant un mécanisme de tension/relâchement qui interrompt ou commande la transmission du mouvement à un mécanisme de transmission en mettant sous tension et en relâchant la courroie précitée. Mais, ce système n'est pas destiné à entraîner des accessoires de moteur.

Aussi, l'invention a pour but de proposer un dispositif de réglage de tension de courroie pour entraîner des accessoires de moteur, tout en maintenant constante la tension appliquée à la courroie, dont l'encombrement est réduit, et qui offre une excellente accessibilité à l'organe de commande.

A cet effet, l'invention a pour objet un dispositif de réglage de la tension d'une courroie d'entraînement d'au moins un accessoire de moteur de véhicule automobile tel que pompe, alternateur ou analogues, du type comprenant un galet tendeur de ladite courroie entraînant des poulies, monté fou sur un boîtier de support et en appui contre cette courroie, avec un axe du galet déplaçable par rapport auxdites poulies à l'aide d'un organe de commande, caractérisé en ce que le boîtier est constitué d'un support des accessoires fixé au moteur et d'une face de fermeture disposée en regard de la courroie, perpendiculairement aux axes des poulies, et en ce que l'axe déplaçable du galet est disposé hors du boîtier et est raccordé à l'organe de commande par un mécanisme de renvoi constitué par un levier pivotant autour d'un arbre de renvoi qui traverse de part en part le boîtier, le premier bras du levier étant solidaire de l'axe déplaçable précité et disposé sur la face de fermeture du boîtier, tandis que le second bras du levier pivotant précité est raccordé à l'organe de commande qui est situé sur la face arrière du support opposée à la face de fermeture, ledit second bras étant monté sur ladite face arrière.

On comprend déjà que grâce à un tel mécanisme de renvoi, il est possible de réduire l'encombrement du boîtier puisque l'ensemble du dispositif de réglage peut être placé hors de celui-ci, à l'exception du galet tendeur, de sorte que l'organe de commande peut être installé à un emplacement où il est aisément accessible.

On précisera encore ici que chaque bras du levier est formé par une biellette qui est fixée à l'une des deux extrémités de l'arbre de renvoi qui traverse le boîtier de part en part.

L'invention est caractérisée en ce que le premier bras est monté à une première extrémité de l'arbre de renvoi en saillie d'une face de fermeture du boîtier, tandis que le deuxième bras est monté à une deuxième extrémité de l'arbre en saillie du fond d'une pièce du boîtier formant support pour les accessoires et qui est fixée au moteur.

L'invention est encore caractérisée en ce que l'organe de commande est constitué par une vis de réglage montée sur le support du boîtier, la vis de réglage étant engagée dans un écrou solidaire du deuxième bras de levier.

De plus, l'organe de commande est monté sur le support par l'intermédiaire d'une patte coudée, un galet bombé et un contre-écrou étant montés sur la vis de réglage de part et d'autre de la patte coudée, de façon à former un moyen d'immobilisation de l'organe de commande.

Selon une autre caractéristique de l'invention, le premier bras en forme de biellette comporte une gorge oblongue et arquée au travers de laquelle fait saillie une vis de guidage.

Mais d'autres avantages et caractéristiques de l'invention apparaîtront mieux à la lecture de la description détaillée d'un mode de réalisation, donné uniquement à tite d'exemple, qui suit et se réfère aux dessins annexés, dans lesquels.

La figure 1 est une vue en élévation d'un système de transmission par poulies et courroie, équipé du dispositif de réglage de la tension de courroie conforme à l'invention.

La figure 2 est une vue suivant la flèche II de la figure 1.

La figure 3 est une vue en coupe suivant la ligne III-III de la figure 2.

La figure 4 est une vue en coupe suivant la ligne IV-IV de la figure 2.

La figure 5 est une vue en coupe suivant la ligne V-V de la figure 4.

La figure 6 est une vue partielle et en coupe suivant la ligne VI-VI de la figure 5.

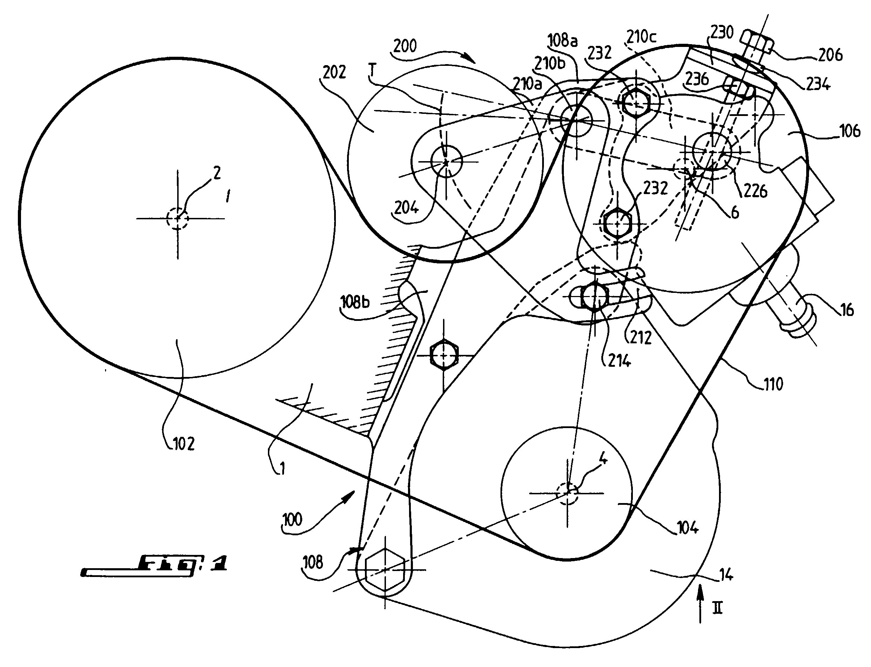

En se reportant tout d'abord à la figure 1, on voit un système de transmission 100 à poulies et couroie, qui est monté sur un moteur 1 d'un véhicule automobile quelconque (non représenté).

Le système de transmission 100 est raccordé, par l'intermédiaire d'une courroie sans fin 110, à une poulie menante 102 qui est solidaire en rotation d'un arbre de vilebrequin 2 du moteur 1.

La courroie 110 relie la poulie menante 102 à deux poulies menées 104 et 106 servant chacune à l'entraînement en rotation d'accessoires 14 et 16 du moteur 1, respectivement.

Plus précisément, un alternateur 14 et une pompe 16 sont fixés sur un boîtier 108 du système de transmission 100, et sont reliés aux poulies menées 104 et 106 par l'intermédiaire d'axes 4 et 6 respectivement, à l'extrémité libre desquels les poulies sont fixées.

Il convient de noter ici que le nombre d'accessoires entraînés par le système de transmission peut être différent de deux, et que ces accessoires peuvent être de types divers, tels que pompe à huile, à carburant ou à fluide pour une direction assistée, ou analogues.

On remarque également sur la figure 1 que le système de transmission 100 comprend un dispositif de réglage de la tension de la courroie 110. Ce dispositif est désigné par la référence générale 200 et comprend un galet tendeur 202 qui est monté fou sur le boîtier de support 108, avec sa périphérie en appui contre la courroie 110. Le galet tendeur 202 est monté pivotant sur un axe 204 qui est déplaçable par rapport auxdites poulies 104 et 106, pour faire varier la tension de la courroie 110. Le déplacement de l'axe 204 du galet 202 est obtenu en agissant sur un organe de commande 206 qui sera décrit ultérieurement.

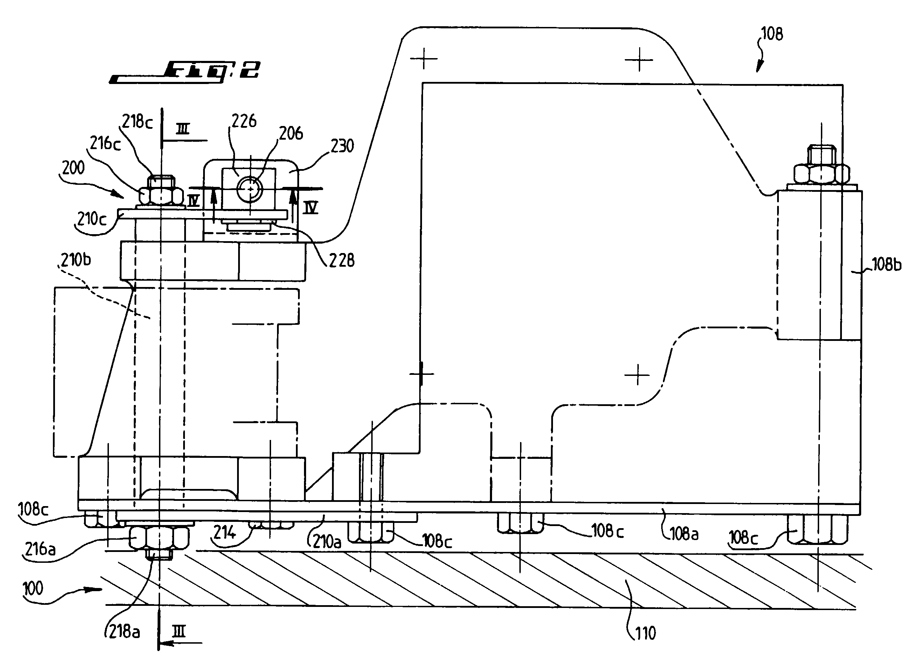

En se reportant maintenant à la figure 2, on voit que le boîtier 108 est constitué par deux pièces qui forment chacune l'une des faces de celui-ci. La première face du boîtier 108 est formée par une plaque ou platine 108a qui fait office de fermeture du boîtier et qui est disposée en regard de la courroie 110. Cette platine 108a qui s'étend suivant un plan perpendiculaire aux axes 4, 6 des poulies 104, 106, est fixée à l'aide de vis 108c sur un support moulé 108b qui constitue la deuxième pièce du boîtier 108 et sur lequel sont fixés les accessoires 14 et 16 décrits plus haut. Bien que ceci ne soit pas représenté, le support 108b est quant à lui fixé sur le moteur 1. Pour faciliter la compréhension et simplifier la description de l'invention, la face du système de transmission où est disposée la platine 108a sera appelée "face avant", tandis que la face constituée par le fond du support moulé 108b sera appelée "face arrière" du système de transmission, tout au long de la description.

Conformément à l'invention, l'axe déplaçable 204 du galet tendeur 202 est disposé à l'extérieur du boîtier 108 et est raccordé à l'organe de commande 206 par un mécanisme de renvoi extérieur au boîtier 108, comme on le voit bien sur la figure 1. Ainsi, seul le galet tendeur 202 est situé à proximité de la courroie 110, ce qui permet de limiter l'encombrement du système de transmission ainsi que de disposer l'organe de commande à un emplacement aisément accessible, tel que par exemple la face arrière du boîtier de support des accessoires à entraîner.

Le mécanisme de renvoi comprend un levier dont chaque bras est constitué par une biellette 210a, 210c fixée par l'une de ses extrémités à un arbre de renvoi 210b qui est monté pivotant sur le boîtier 108.

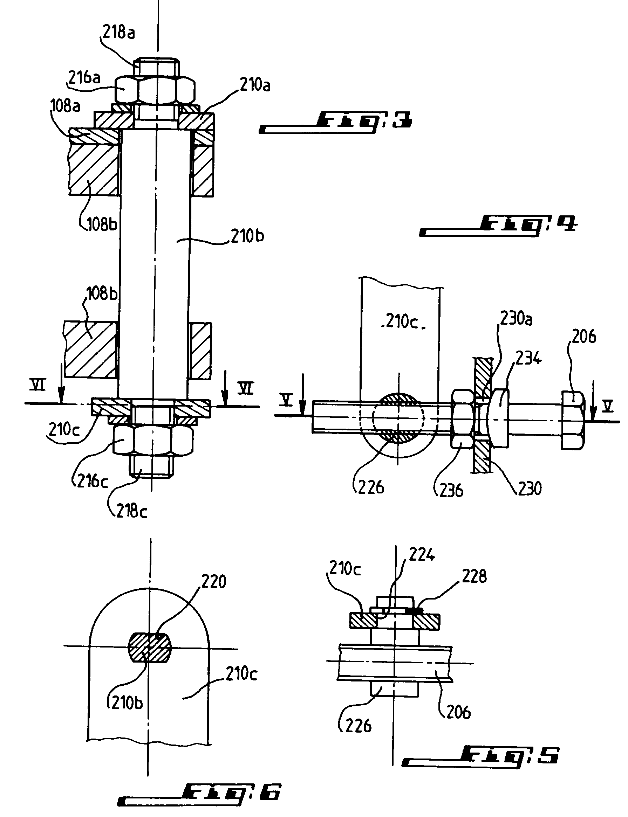

En se reportant maintenant aux figures 2 et 3, on remarque que l'arbre de renvoi 210b traverse le boîtier 108, de part en part, c'est-à-dire depuis sa face avant jusqu'à sa face arrière. Ainsi, une première extrémité de l'arbre 210b fait saillie de la platine 108a, et une seconde extrémité de l'arbre 210b fait saillie du fond du support 108b. L'arbre de renvoi 210b est monté pivotant dans deux paliers réalisés dans des bossages intégrés au support 108b, comme visible sur la figure 3, ceci afin de lui assurer un guidage rigide évitant les déformations.

La première biellette 210a du levier a une forme sensiblement triangulaire. L'axe déplaçable 204 du galet tendeur 202 est fixé à cette biellette 210a à proximité de l'un de ses angles, et l'arbre de renvoi 210b vient se loger dans un perçage à méplats situé à un deuxième angle de la biellette 210a, comme visible sur la figure 1. Le troisième angle de la biellette 210a présente une gorge oblongue 212 qui s'étend suivant un arc de cercle centré sur l'arbre 210b. Une vis de guidage 214 qui est fixée sur le boîtier 108 s'étend en saillie de la platine 108a et de la gorge oblongue 212. Cette vis 214 permet soit de guider la première biellette 210a du levier lors du déplacement du galet tendeur 202, soit de bloquer le mécanisme de renvoi quand la tension souhaitée de la courroie est obtenue.

On voit bien sur les figures 2 et 6 que le premier bras 210a du levier est monté à la première extrémité de l'arbre de renvoi 210b qui fait saillie de la face avant du boîtier où s'étend la platine 108a. Le deuxième bras 210c du levier est monté quant à lui à la seconde extrémité de l'arbre de renvoi 210b qui fait saillie du support 108b sur lequel sont montés les accessoires 14 et 16 du moteur. La deuxième biellette 210c est rendue solidaire en rotation de l'arbre de renvoi 210b par un perçage à méplats 220 bien visible sur la figure 6, dans lequel une partie de forme correspondante de la deuxième extrémité de l'arbre 210b vient se loger.

Les premier et second bras 210a et 210c sont fixés à l'arbre 210b à l'aide d'écrous 216a et 216c respectivement, qui sont serrés sur des filetages 218a, 218c formés à chacune des extrémités de l'arbre 210b.

On comprend donc que la première biellette 210a est disposée sur la face avant du boîtier 108, entre la courroie 110 et la platine 108a, et que la deuxième biellette 210c qui va être décrite ci-après est montée sur la face arrière du système de transmission 100. Ainsi, la majeure partie du dispositif de réglage de la tension de courroie 200 peut être disposée à l'arrière du boîtier 108, qui est généralement une zone dégagée et d'accès aisé.

La deuxième biellette 210c du levier est de forme oblongue, comme visible sur les figures 1,4 et 6. Cette biellette s'étend suivant un plan sensiblement parallèle à la platine 108a. Cette biellette 210c comporte à son extrémité opposée à l'arbre de renvoi 210b, un perçage circulaire 224, visible sur la figure 5, et dans lequel un canon formant écrou 226 est monté à rotation. Le canon formant écrou 226 est maintenu sur la seconde biellette 210c à l'aide d'une rondelle élastique 228 qui est clippée dans une gorge périphérique réalisée à l'extrémité du canon. Grâce à ce montage, un perçage fileté du canon 226 peut librement s'orienter suivant la position de la deuxième biellette 210c du levier.

En se reportant plus particulièrement aux figures 1 et 4, on remarque que l'organe de commande 206 est essentiellement constitué par une vis de réglage dont l'extrémité filetée est engagée dans le perçage fileté du canon formant écrou 226. La vis de réglage 206 est montée par son autre extrémité sur une patte coudée 230 qui est fixée, à l'aide de vis 232, sur la face arrière du boîtier. Plus précisément, la vis de réglage 206 passe avec jeu au travers d'un perçage 230a effectué dans une partie de la patte coudée 230 sensiblement perpendiculaire à la platine 108a. Un galet bombé 234 est fixé sur la vis de réglage 206 de façon à permettre un appui rotulant de l'organe de réglage sur la patte coudée 230. Un contre-écrou 236 est vissé sur l'organe de réglage 206 de manière à venir en appui contre le côté de la patte coudée 230 qui est opposé au galet bombé 234, lorsqu'il est serré. L'ensemble formé par le galet bombé 234 et le contre-écrou 236 fait office de moyen d'immobilisation de l'organe de commande.

En se reportant de nouveau à la figure 1, le fonctionnement du dispositif de réglage de la tension conforme à la présente invention va être décrit ci-dessous.

Pour régler ou ajuster la tension appliquée à la courroie d'entraînement 110 par le galet tendeur 202, il convient tout d'abord de déserrer la vis de guidage 214 et le contre-écrou 236. Ensuite, en faisant tourner l'organe de commande ou vis de réglage 206, le canon formant écrou 226 est déplacé le long de l'axe longitudinal de la vis 206, de sorte que la deuxième biellette 210c pivote autour de l'arbre de renvoi 210b. Puisque la deuxième biellette 210c, l'arbre 210b et la première biellette 210a sont solidaires en rotation grâce aux perçages à méplats 220, la rotation du deuxième bras de levier 210c provoque le pivotement de la première biellette 210a autour de l'arbre 210b. Alors, l'axe 204 du galet tendeur 202 qui est monté sur la première biellette 210a est déplacé suivant la trajectoire T indiquée en pointillés sur la figure 1. Le pivotement de la première biellette 210a est guidé par le coulissement de la vis 214 à l'intérieur de la gorge arquée 212. Ainsi, le galet tendeur 202 dont la périphérie est en contact de roulement avec la face extérieure de la courroie 110, peut exercer sur cette dernière une tension plus ou moins importante en fonction de la position de l'axe déplaçable 204 sur la trajectoire T. Une fois que la tension de courroie souhaitée a été obtenue, il suffit de resserrer le contre-écrou 236 et la vis de guidage 214 de façon à immobiliser l'axe 204 du galet tendeur 202, de manière à maintenir constante la tension appliquée à la courroie.

On a donc obtenu conformément à l'invention un dispositif de réglage de tension qui est simple, d'encombrement réduit, et qui permet grâce au mécanisme de renvoi expliqué plus haut, d'obtenir une bonne accessibilité à l'organe de commande.

## Revendications

1. Dispositif de réglage (200) de la tension d'une courroie d'entraînement d'au moins un accessoire de moteur de véhicule automobile tel que pompe (16), alternateur (14) ou analogues, du type comprenant un galet (202) tendeur de ladite courroie (110) entraînant des poulies (104, 106), monté fou sur un boîtier de support (108) et en appui contre cette courroie, avec un axe (204) du galet déplaçable par rapport aux-dites poulies à l'aide d'un organe de commande (206), caractérisé en ce que le boîtier (108) est constitué d'un support (108b) des accessoires (14, 16) fixé au moteur (1) et d'une face de fermeture (108a) disposée en regard de la courroie (110), perpendiculairement aux axes (4, 6) des poulies (104, 106), et en ce que l'axe déplaçable (204) du galet tendeur est disposé hors du boîtier (108) et est raccordé à l'organe de commande (206) par un mécanisme de renvoi constitué d'un levier pivotant autour d'un axe de renvoi (210b) qui traverse de part en part le boîtier (108), le premier bras (210a) dudit levier étant solidaire de l'axe déplaçable (204) du galet (202) et disposé sur la face de fermeture (108a) du boîtier, tandis que le second bras (210c) du levier pivotant précité est raccordé à l'organe de commande (206) qui est situé sur la face arrière du support (108b) opposée à la face de fermeture (108a), ledit second bras étant monté sur ladite face arrière.

2. Dispositif selon la revendication 1, caractérisé en ce que chaque bras du levier a la forme d'une biellette (210a, 210c) et est fixé à l'une des deux extrémités de l'arbre de renvoi (210b) qui traverse le boîtier (108) de part en part.

3. Dispositif selon la revendication 2, caractérisé en ce que le premier bras (210a) est monté à une première extrémité (218a) de l'arbre de renvoi en saillie d'une face de fermeture du boîtier (108) tandis que le deuxième bras (210c) est monté à une deuxième extrémité (218c) de l'arbre (210b) en saillie du fond d'une pièce du boîtier formant support (108b) pour les accessoires et qui est fixée au moteur.

4. Dispositif selon la revendication 3, caractérisé en ce que l'organe de commande (206) est constitué par une vis de réglage montée sur le support (108b) du boîtier, la vis de réglage (206) étant engagée dans un écrou (226) solidaire du deuxième bras (210c) du levier.

5. Dispositif selon la revendication 4, caractérisé en ce que l'organe de commande (206) est monté sur le support (108b) par l'intermédiaire d'une patte coudée (230), un galet bombé (234) et un contre-écrou (236) étant montés sur la vis de réglage (206) de part et d'autre de la patte coudée (230), de façon à former un moyen d'immobilisation de l'organe de commande (206).

6. Dispositif selon l'une des revendications 2 à 5, caractérisé en ce que le premier bras (210a) en forme de biellette comporte une gorge (212) oblongue et arquée, au travers de laquelle fait saillie une vis de guidage (214).

## Patentansprüche

1. Vorrichtung (200) zur Einstellung der Spannung eines wenigstens ein Zubehörgerät des Motors eines Kraftfahrzeuges, wie eine Pumpe (16), einen Wechselstromerzeuger (14) oder dergleichen antreibenden Riemens, derjenigen Gattung, mit einer Rolle (202) zur Spannung des besagten Scheiben (104, 106) antreibenden Riemens (110), welche Rolle an einem Tragkasten (108) lose und sich an diesem Riemen abstützend angeordnet ist, mit einem sich mit Hilfe eines Betätigungsgliedes (206) in bezug auf die besagten Scheiben verschiebbaren Bolzen (204) der Rolle, dadurch gekennzeichnet, dass der Kasten (108) aus einem an dem Motor (1) befestigten Halter (108b) für die Zubehörgeräte (14, 16) und aus einer gegenüber dem Riemen (110) und senkrecht zu den Bolzen (4, 6) der Scheiben (104, 106) angeordneten Verschlußfläche (108a) besteht und dass der verschiebbare Bolzen (204) der Spannrolle ausserhalb des Kastens (108) angeordnet ist und mit dem Betätigungsglied (206) durch einen Umlenkungsmechanismus verbunden ist, der aus einem um eine den Kasten (108) vollkommen durchsetzende Umlenkwelle (210b) schwenkbaren Hebel besteht, wobei der erste Arm (210a) des besagten Hebels mit dem verschiebbaren Bolzen (204) der Rolle (202) fest verbunden und an der Verschlußfläche (108a) des Kastens angeordnet ist, während der zweite Arm (210c) des vorgenannten Schwenkhebels mit dem Betätigungsglied (206), das an derjenigen hinteren Fläche des Halters (108b), die der Verschlußfläche (108a) entgegengesetzt ist, gelegen ist, verbunden ist, wobei der besagte zweite Arm an der besagten hinteren Fläche angeordnet ist.

2. Vorrichtung nach Anspruch 1, dadurch gekennzeichnet, dass jeder Hebelarm die Gestalt einer Lenkstange (210a, 210c) hat und an einem der beiden Enden der Umlenkwelle (210b), die den Kasten (108) vollkommen durchsetzt, befestigt ist.

3. Vorrichtung nach Anspruch 2, dadurch gekennzeichnet, dass der erste Arm (210a) an einem von einer Verschlußfläche des Kastens (108) vorspringenden ersten Ende (218a) der Umlenkwelle angeordnet ist, während der zweite Arm (210c) an einem von dem Boden eines an dem Motor befestigten Bestandteiles des eine Halterung (108b) für die Zubehörgeräte bildenden Kastens vorspringenden zweiten Ende (218c) der Welle (210b) angeordnet ist.

4. Vorrichtung nach Anspruch 3, dadurch gekennzeichnet, dass das Betätigungsglied (206) durch eine an dem Halter (108b) des Kastens angeordnete Stellschraube gebildet wird, wobei die Stellschraube (206) in einer mit dem zweiten Arm (210c) des Hebels fest verbundenen Mutter (226) eingeführt ist.

5. Vorrichtung nach Anspruch 4, dadurch gekennzeichnet, dass das Betätigungsglied (206) an dem Halter (108b) über einen abgewinkelten Ansatzlappen (230) angeordnet ist, wobei eine bauchige Rolle (234) und eine Sicherungsmutter (236) an der Stellschraube (206) beiderseits des abgewinkelten Ansatzlappens (230) gelagert sind, um ein Mittel zum Festhalten des Betätigungsgliedes (206) zu bilden.

6. Vorrichtung nach einem der Ansprüche 2 bis 5, dadurch gekennzeichnet, dass der erste lenkarmförmige Arm (210a) einen länglichen und bogenförmigen Schlitz (212) aufweist, durch welchen einen Führungsschraube (214) vorspringt.

## Claims

1. Device (200) for the control of the tension of a belt driving at least one accessory of the engine of an automotive vehicle, such as a pump (16), an alternator (14) or the like, of the type comprising a roller (202) stretching the said belt (110) driving pulleys (104, 106), which roller is loosely mounted onto a supporting casing (108) and is bearing upon this belt, with a roller shaft (204) displaceable with respect to the said pulleys with the assistance of a control member (206), characterized in that the casing (108) consists of a support (108b) for the accessories (14, 16), the support being fastened to the engine (1) and of a closure face (108a) disposed in front of the belt (110) in perpendicular relation to the shafts (4, 6) of the pulleys (104, 106) and in that the displaceable shaft (204) of the tightner roller is disposed outside of the casing (108) and is connected to the control member (206) by a transfer mechanism consisting of a lever pivoting about a counter-shaft (210b) which extends right through the casing (108), the first arm (210a) of the said lever being made fast to the displaceable shaft (204) of the roller (202) and disposed onto the closure face (108a) of the casing whereas the second arm (210c) of the aforesaid pivoting lever is connected to the control member (206) which is located onto the rear face of the support (108b) opposite to the closure face (108a), the said second arm being mounted onto the said rear face.

2. Device according to claim 1, characterized in that each lever arm has the shape of a link (210a, 210c) and is fastened to one of the two ends of the counter-shaft (210b) which extends right through the casing (108).

3. Device according to claim 2, characterized in that the first arm (210a) is mounted on a first end (218a) of the counter-shaft projecting from one closure face of the casing (108) whereas the second arm (210c) is mounted on a second end (218c) of the shaft (210b) projecting from the bottom of a part of the casing forming a support (108b) for the accessories and which is fastened to the engine.

4. Device according to claim 3, characterized in that the control member (206) consists of an adjustment set screw mounted onto the support (108b) of the casing, the adjustment set screw (206) being inserted into a nut (226) made fast to the second arm (210c) of the lever.

5. Device according to claim 4, characterized in that the control member (206) is mounted onto the support (108b) through the medium of a bent lug (230), a bulging roller (234) and a lock nut (236) being mounted onto the adjustment set screw (206) on either side of the bent lug (230) so as to form a means for immobilizing the control member (206).

6. Device according to one of claims 2 to 5, characterized in that the first link-shaped arm (210a) comprises an oblong and arcuated slot (212) through which projects a guide screw (214).
